# EUROPÄISCHE PATENTSCHRIFT

(11) **EP 2 208 119 B1**
(45) Veröffentlichungstag und Bekanntmachung des Hinweises auf die Patenterteilung: **26.06.2013**
(21) Anmeldenummer: 08846748.5
(22) Anmeldetag: 05.11.2008
(51) Int. Cl.: G05B 19/042, G01N 27/00

(54) **VERFAHREN ZUM ÜBERTRAGUNG EINES SOFTWAREMODULS AN EINE MESSTELLE**
METHOD FOR TRANSMITTING A SOFTWARE MODULE TO A MEASURING POINT
PROCÉDÉ DE TRANSMISSION D'UN MODULE LOGICIEL À UN POSTE DE MESURE

(30) Priorität: 06.11.2007 DE 102007053223
(43) Veröffentlichungstag der Anmeldung: 21.07.2010
(73) Patentinhaber: Endress+Hauser Conducta Gesellschaft für Mess- und Regeltechnik mbH & Co. KG, 70839 Gerlingen (DE)
(72) Erfinder: LOHMANN, Martin, 70839 Gerlingen (DE); KAISER, Ulrich, CH-4057 Basel (CH); MIETH, Tobias, 01097 Dresden (DE); SCHEIBE, Sven-Matthias, 01129 Dresden (DE); WEISS, Reinhard, Leonberg 71229 (DE); BETZ, Jochen, 71254 Dietzingen (DE)
(74) Vertreter: Andres, Angelika Maria
(86) Internationale Anmeldenummer: PCT/EP2008/065005
(87) Internationale Veröffentlichungsnummer: WO 2009/060001

(56) Entgegenhaltungen:
- EP-A- 1 659 489
- DE-A1- 10 313 389
- DE-A1- 10 313 639
- DE-A1-102004 063 469
- DE-A1-102006 020 341

## Beschreibung

Die vorliegende Erfindung betrifft ein Verfahren zum Betreiben einer Messstelle zum Bestimmen eines Werts einer physikalischen oder chemischen Messgröße eines Mediums, wobei die Messstelle eine Basiseinheit und eine Sensoreinheit umfasst, wobei die Sensoreinheit über eine Steckverbinderkupplung lösbar mit der Basiseinheit verbindbar ist; die Basiseinheit zur Energieversorgung der Sensoreinheit, zum Datenaustausch mit der Sensoreinheit und zur Kommunikation eines den Wert der Messgröße repräsentierenden Signals an eine Prozessüberwachungsanlage vorgesehen ist;
wobei die Basiseinheit umfasst:
ein erstes Element der Steckverbinderkupplung;
einen ersten Mikroprozessor zur Aufbereitung von Daten, die von der Sensoreinheit empfangen werden, zur Kommunikation an die Prozessüberwachungsanlage;
einen ersten Datenspeicher zum Speichern von messstellenspezifischen Daten;
wobei ferner die Sensoreinheit einen Primärsensor und einen Sensorkopf aufweist, wobei der Sensorkopf fest mit dem Primärsensor verbunden ist;
das Medium auf den Primärsensor einwirkt, welcher einen Wandler mit einem Signalausgang umfasst, welcher einen von dem Wert der Messgröße abhängiges elektrisches Signal ausgibt, wobei der Wandler eine veränderliche Übertragungsfunktion aufweist;
wobei der Sensorkopf umfasst:
   eine Schaltung zur Aufbereitung der Wandlersignale, wobei die Schaltung einen A/D-Wandler und einen zweiten Mikroprozessor zur Verarbeitung der digitalisierten Signale aufweist,
   einen zweiten Datenspeicher, in dem sensorspezifische Daten gespeichert sind;
   einen Programmspeicher, welcher eine hardwarenahe Software mit Grundfunktionalitäten zum Betrieb der Sensoreinheit enthält; und
   eine Schnittstelle, über welche die Energieversorgung der Sensoreinheit durch die Basiseinheit und der Datenaustausch mit der Basiseinheit erfolgen, wobei die Schnittstelle ein zweites Element der Steckverbinderkupplung umfasst.

Derartige Messstellen sind beispielsweise pH-Messstellen oder andere Messstellen der Analysemesstechnik. Hierzu gehören insbesondere weitere potentiometrische, amperometrische, coulometrische, colorimetrische, photometrische, turbidimetrische und spektometrische Messstellen.

In DE 103 13 639 A1 ist ein Gassensormodul beschrieben, das über eine induktive Schnittstelle zum Datenaustausch mit einem Umformermodul verbunden werden kann. Das Gassensormodul weist einen Primärsensor und einen fest mit dem Primärsensor verbundenen Sensorkopf auf. Der Sensorkopf umfasst einen Datenspeicher, in dem sensorspezifische Daten, wie Kalibrierdaten, die Empfindlichkeit des Sensors, Extremalwerte der Betriebstemperatur und andere Informationen zum Gassensormodul bzw. logistische Informationen gespeichert werden können.

In DE 10 2006 020 341 A1 ist ein zweiteiliger Sensor bestehend aus einem Sensorkopf und einem Sensorkopfgegenstück beschrieben. Die Datenübertragung zwischen dem Sensorkopf und dem Sensorkopfgegenstück erfolgt über eine induktive Kopplung. Das Sensorkopfgegenstück kann mit einem Leitsystem, beispielsweise einer speicherprogrammierbaren Steuerung oder einer dezentralen Steuerung, verbunden werden. Zwischen dem Leitsystem und dem Sensor (Sensorkopfgegenstück bzw. Sensorkopf) werden verschiedene Messdaten, Parametrierdaten und sensorspezifische Daten, wie z.B. eine Sensorkennung, Produktionsdatum, Hardware- und Software-Version, Messwerte mit Hauptmesswert und Nebenmesswert, Kalibrierdaten, Datum/Uhrzeit, Kalibrationsmethode, Sensorzustand mit Verwendungsdauer unter Extrembedingungen, Kalibrierzyklen und Hilfsparameter zur Zustandsbewertung übertragen.

In EP 1 659 489 A1 ist ein Verfahren beschrieben, bei dem automatisch erkannt wird, ob der Funktionsumfang einer Gerätesoftware eines Geräts der Mess- und Regeltechnik, die die Funktionalität des Geräts bestimmt, und eines auf einer Geräte-Steuervorrichtung, z.B. einem externen Steuercomputer, ausgeführten Gerätetreibers noch übereinstimmen. Bei diesem Verfahren wird zwischen der Geräte-Steuervorrichtung und dem Gerät über eine Schnittstelle zwischen der Geräte-Steuervorrichtung und dem Gerät eine Gerätetreiberversionsinformation und/oder eine Gerätesoftwareversionsinformation übertragen, und die Gerätetreiberversionsinformation und die Gerätesoftwareversionsinformation hinsichtlich Kompatibilität der übereinstimmenden Funktionalitäten miteinander verglichen, Bei Bedarf wird automatisch ein Update des Gerätetreibers und/oder der Gerätesoftware auf die zueinander passende Version ausgelöst. Dieses Verfahrens dient lediglich zur Behebung des Problems nicht zueinander passender Versionen einer Gerätesoftware und eines zugeordneten Gerätetreibers.

In DE 103 13 389 A1 ist eine Übertragung von Softwarecode von einer als Steuereinheit dienenden Rechnereinheit zu einem Feldgerät beschrieben. Der Softwarecode, der im Feldgerät geladen werden soll, wird dabei in ein Softwaremodul integriert, das verschiedene Daten und Funktionen des Feldgerätes kapselt und das als Laufzeiturngebung ein Bedienprogramm für Feldgeräte benötigt. Über das Bedienprogramm kommuniziert das Softwaremodul mit dem Feldgerät. Das zu übertragende Softwaremodul stellt im Wesentlichen den Software-Treiber für das Feldgerät mit allen gerätespezifischen Funktionen und Dialogen, sowie der Benutzeroberfläche für Parametrierung, Konfigurierung, Diagnose und Wartung dar.

Das der Erfindung zugrunde liegende Problem soll anhand eines Beispiels von pH-Messstellen erläutert werden, ohne dass jedoch die Erfindung auf ein Verfahren zum Betreiben von pH-Messstellen beschränkt sein soll.

Wie eingangs erwähnt, weisen die Wandler der Primärsensoren eine veränderliche Übertragungsfunktion auf, was insbesondere für pH-Sensoren gilt. Deshalb müssen pH-Sensoren bzw. pH-Elektroden zu geeigneten Zeitpunkten kalibriert werden. Es ist jedoch nicht einfach, den Zeitpunkt der nächsten Kalibrierung genau zu bestimmen, da dieser von Messstelle zu Messstelle und von Kalibrierung zu Kalibrierung schwanken kann.

Entsprechend sind pH-Sensoren, bzw. pH-Elektroden nach einer von Messstelle zu Messstelle unterschiedlichen Standzeit zu ersetzen bzw. zumindest zu reinigen bzw. in anderer Weise aufzubereiten.

Der Stand der Technik kennt verschiedene Ansätze, um brauchbare Prognosen für den nächsten Kalibrierzeltpunkt, bzw. die Reststandzeit einer pH-Elektrode abzuschätzen. Hierzu kann einerseits die zeitliche Entwicklung der Kalibrierdaten verfolgt werden, wobei sich aus einer Trendanalyse der Kalibrierdaten ergibt, wann die nächste Kalibrierung erforderlich sein wird, bzw. wann die Ablage der Primärsignale des Wandlers von den Ursprungswerten soweit fortgeschritten ist, dass eine Kalibrierung nicht mehr möglich sein wird. Ein anderer Ansatz zur Prognose der Reststandzeit eines Sensors beruht auf der Summierung von Belastungsäquivalenten, denen der Sensor an einer Messstelle ausgesetzt ist.

Schließlich können beide Verfahren, also die Trendanalyse der Kalibrierdaten und die Summierung von Belastungsäquivalenten miteinander kombiniert werden, wobei beispielsweise zunächst anhand einer Trendanalyse zu den Kalibrierdaten die verbleibende Zeit bis zu einer Kalibrierung bzw. Wartungsmaßnahme abgeschätzt wird, und die bis dahin ablaufende Zeit mit den jeweils aktuellen Belastungsäquivalenten gewichtet wird. Ansätze zu den zuvor genannten Verfahren sind beispielsweise in den Offenlegungsschriften DE 102004012420 A1, DE 102004063468 A1 und DE 102004063469 A1 offenbart.

Ein weiter gehender Ansatz zur Zustandsanalyse eines pH-Sensors beruht beispielsweise auf der so genannten Hauptkomponentenanalyse und ist in der hängigen Deutschen Patentanmeldung Nr. 102006030895.6 offenbart. Bei den genannten Ansätzen zur Planung von Kalibrier- bzw. Wartungsmaßnahmen und zur Prognose von Reststandzeiten zeichnet sich jedoch ab, dass diese modellbasierten Vorgehensweisen letztlich von Messstelle zu Messstelle schwanken, wobei hier mit Messstelle nicht zwingend der Ort gemeint ist, an dem ein Sensor zum Einsatz kommt, sondern die dort vorherrschenden spezifischen Bedingungen, also die Art des Mediums, seine Strömungsgeschwindigkeit und seine Temperatur. Weitere Parameter, die die Standzeit eines Sensors beeinflussen können, sind beispielsweise Temperatursprünge, die Schmutzfracht eines Mediums, dessen aggressive Eigenschaften, pH-Sprünge, Vibrationen der Anlage, das Überschreiten von Grenzwerten und dergleichen mehr.

Insoweit, als die Zahl der relevanten Parameter unübersichtlich groß ist, ist es nicht praktikabel, ein umfassendes Modell für die Alterung von Sensoren anzugeben, welches an allen Messstellen bzw. unter denen dort spezifisch vorherrschenden Bedingungen eine zuverlässige Abschätzung der Standzeiten der zu erforderlichen Wartungsmaßnahmen ermöglichen würde. Weiterhin erscheint es unzweckmäßig, eine Sensoreinheit, der nur eine begrenzte elektrische Leistung zur Verfügung steht, und die nur einen limitierten Programmspeicher und Datenspeicher umfasst, mit einem derart komplexen Modell zu überfrachten, zumal dieses Modell nicht die Kernfunktionen des Sensors betrifft, sondern nur begleitende Funktionen, welche die Gewährleistung der Funktionen überwachen sollen.

Dies gilt um so mehr, als pH-Sensoren Verbrauchsmaterialien sind, und der vorgesehene Speicherplatz im Sensor sowie die Mikroprozessorleistung im Sensor begrenzt ist. Insbesondere bei pH-Messstellen, bei denen die Sensoreinheit über eine Steckverbindung, die eine induktive Schnittstelle aufweist, mit der Basiseinheit verbunden ist, die von der Anmelderin unter der Marke "Memosens" vertrieben werden, ist die der Sensoreinheit zur Verfügung stehende elektrische Leistung begrenzt, zumal die Sensoreinheit auch für explosionsgefährdete Umgebungen geeignet sein soll.

Weiterhin ist es jedoch ein Erfordernis des Komplexitätsmanagements bzw, der Vereinfachung der Logistik, dass bei der Lagerhaltung und der pH-Sensoren, welche Verbrauchsmaterialien sind, nicht nach Messstellen differenziert werden müssen.

Insoweit ist es eine Aufgabe der vorliegenden Erfindung, ein Verfahren zum Betreiben von Messstellen anzugeben, welches den zuvor geschilderten Anforderungen gerecht wird.

Die Aufgabe wird erfindungsgemäß gelöst, durch ein Verfahren gemäβ Anspruch 1. Dabei wird von der Basiseinheit an die Sensoreinheit mindestens ein Softwaremodul übertragen und in den Programmspeicher der Sensoreinheit gespeichert, wobei das Softwaremodul der Sensoreinheit ergänzende Funktionen zur Überwachung des Primärsensors ermöglicht. Weiterhin offenbart die Erfindung eine entsprechende Messstelle.

Dieses Softwaremodul ist messstellenspezifisch ausgelegt. Es kann insbesondere eine Prognose von Kalibrierzeiten unter 1-1 anderem Wartungsmaßnahmen unter den Besonderheiten der jeweiligen Messstelle ermöglichen.

Das Softwaremodul beinhaltet eine Funktion zur Analyse des Alterungsverhaltens des Primärsensors unter den Bedingungen der Messstelle.

gemäβ der Erfindung kommuniziert die Sensoreinheit bei der Inbetriebnahme der Sensoreinheit Formationen zum Sensortyp und zur Art bzw. zur Version der im Programmspeicher bereits gespeicherten Softwaremodule an die Basiseinheit. Daraufhin kann die Basiseinheit prüfen, ob die Art und die Version der gegebenenfalls in der Sensoreinheit vorliegenden Softwaremodule für die Messstelle passen. Gegebenenfalls kann die Basiseinheit messstellenspezifische Softwaremodule in einem Speicher bereithalten und im Bedarfsfall an die Sensoreinheit übertragen. Dies kann insbesondere dann der Fall sein, wenn die Sensoreinheit noch keine zur Messstelle passenden Softwaremodule beinhaltet bzw. wenn die in dem Speicher der Sensoreinheit vorhandenen Softwaremodule bereits veraltet sind. Ein Softwaremodul ist beispielsweise dann veraltet, wenn eine aktuellere Version des Softwaremoduls vorliegt.

In einer Weiterbildung des erfindungsgemäßen Verfahrens überträgt die Basiseinheit die von der Sensoreinheit empfangene Information zum Sensortyp und zur Art bzw. zur Version der im Programmspeicher der Sensoreinheit gespeicherten Softwaremodule an eine übergeordnete Einheit der Prozessüberwachungsanlage, woraufhin die übergeordnete Einheit überprüft, ob geeignetere bzw. aktuellere Softwaremodule für den Sensortyp an der spezifischen Messstelle verfügbar sind, und wobei gegebenenfalls die geeigneteren bzw. aktuelleren Softwaremodule an die Basiseinheit übertragen werden. Die Basiseinheit kann dann diese geeigneteren bzw. aktuelleren Softwaremodule an die Sensoreinheit weiterleiten. Im Ergebnis ermöglicht das erfindungsgemäße Verfahren eine einfache Aktualisierung bzw. Anpassung der Sensoreinheiten, insbesondere pH-Sensoren, an die jeweilige Messstelle, was eine vereinfachte Lagerhaltung der pH-Elektroden ermöglicht.

Messstelle zum Bestimmen eines Werts einer physikalischen oder chemischen Messgröße eines Mediums, wobei

die Messstelle eine Basiseinheit und eine Sensoreinheit umfasst, wobei die Sensoreinheit über eine Steckverbinderkupplung lösbar mit der Basiseinheit verbindbar ist;

die Basiseinheit zur Energieversorgung der Sensoreinheit, zum Datenaustausch mit der Sensoreinheit und zur Kommunikation eines den Wert der Messgröße repräsentierenden Signals an eine Prozesssüberwachungsanlage vorgesehen ist,
wobei die Basiseinheit umfasst:
ein erstes Element der Steckverbinderkupplung;
einen ersten Mikroprozessor zur Aufbereitung von Daten, die von der Sensoreinheit empfangen werden, zur Kommunikation an die Prozessüberwachungsanlage;
einen ersten Datenspeicher zum Speichern von messstellenspezifischen Daten;
die Sensoreinheit einen Primärsensor und einen Sensorkopf aufweist,
wobei der Sensorkopf fest mit dem Primärsensor verbunden ist;
der Primärsensor mit dem Medium beaufschlagbar ist, wobei der Primärsensor einen Wandler mit einem Signalausgang umfasst, welcher ein von dem Wert der Messgröße abhängiges elektrisches Signal ausgibt, wobei der Wandler eine veränderliche Übertragungsfunktion aufweist;
wobei der Sensorkopf umfasst:
   eine Schaltung zur Aufbereitung der Wandlersignale, wobei die Schaltung einen A/D-Wandler und einen zweiten Mikroprozessor zur Verarbeitung der digitalisierten Signale aufweist,
   einen zweiten Datenspeicher, in dem sensorspezifische Daten gespeichert sind;
   einen Programmspeicher welcher eine hardwarenahe Software mit Grundfunktionalitäten zum Betrieb der Sensoreinheit enthält; und
   eine Schnittstelle, über welche die Energieversorgung der Sensoreinheit durch die Basiseinheit und der Datenaustausch mit der Basiseinheit erfolgt, wobei die Schnittstelle ein zweites Element der Steckverbinderkupplung umfasst;
wobei ferner von der Basiseinheit an die Sensoreinheit mindestens ein Softwaremodul übertragbar und in dem Programmspeicher der Sensoreinheit speicherbar ist, wobei das Softwaremodul ergänzende Funktionen zur Überwachung des Primärsensors enthält.

Die Erfindung wird nun anhand eines in den Zeichnungen dargestellten Ausführungsbeispiels näher erläutert. Es zeigt:
Fig. 1: Eine schematische Anordnung einer Prozessüberwachungsanlage zur Durchführung des erfindungsgemäßen Verfahrens; und
Fig. 2: Eine schematische Darstellung der Komponenten einer Messstelle.

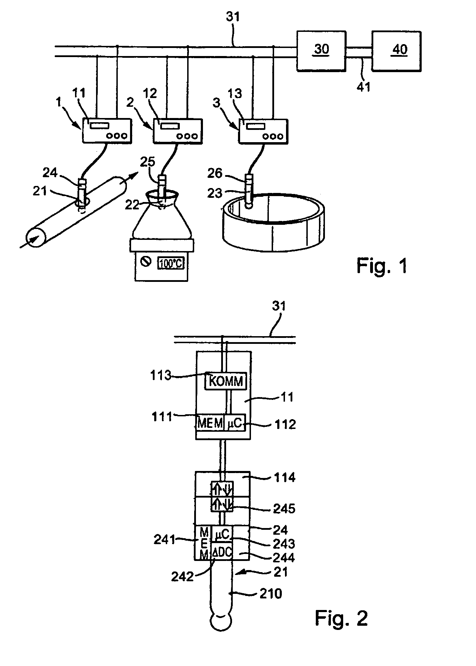

Die in Fig. 1 gezeigte Prozessüberwachungsanlage umfasst beispielsweise drei Messstellen 1, 2, 3 die jeweils eine Basiseinheit 11, 12, 13 und eine Sensoreinheit 21, 22, 23 aufweisen, deren Einzelheiten nun anhand der Fign. 1 und 2 erläutert werden sollen.

Bei den Sensoreinheiten handelt es sich im Ausführungsbeispiel um pH-Sensoren, die jeweils einen Primärsensor 21, 22, 23 in Form einer Einstabmesskette und einen Sensorkopf 24 aufweisen, wobei der Sensorkopf fest mit der Einstabmesskette verbunden ist. Mit der festen Verbindung ist gemeint, dass die Einstabmesskette vom Benutzer nicht zerstörungsfrei vom Sensorkopf 24 getrennt werden kann. Weitere Einzelheiten werden nun anhand von Fig. 2 erläutert. Der Signalausgang der Einstabmesskette 210, welche den aktuellen pH-Wert in eine Potentialdifferenz zwischen einem Referenzpotential und einem pH-abhängigen Potential wandelt, wird einer Schaltung zur Aufbereitung der Signale der Einstabmesskette im Sensorkopf 24 zugeführt, wobei die Schaltung einen A/D-Wandler 242 und einen Mikroprozessor 243 zur Verarbeitung der digitalisierten Signale aufweist. Von der Einstabmesskette wird weiterhin ein Temperatursignal ausgegeben. Der Sensorskopf enthält weiterhin einen Datenspeicher 241, in dem sensorspezifische Daten gespeichert sind, beispielsweise Kalibrierdaten und deren Historie, Daten zu Belastungshistorie, wie pH-Extremwerte und deren Dauer, Temperaturextremwerte und deren Dauer, Grenzwertüberschreitungen usw., logistische Daten und Daten zur Softwareausstattung der Sensoreinheit.

Weiterhin enthält der Sensorkopf einen Programmspeicher 245, welcher einen Bootloader und hardwarenahe Software mit Grundfunktionalitäten zum Betrieb der Sensoreinheit enthält, also die so genannte Firmware. Darüber hinaus kann der Programmspeicher noch Softwaremodule enthalten, auf die weiter unten eingegangen wird.

Weiterhin enthält der Sensorkopf eine vorzugsweise induktiv koppelnde Schnittstelle 245, über welche die Energieversorgung der Sensoreinheit 21 durch die Basiseinheit 11 und der Datenaustausch mit der Basiseinheit 11 erfolgt. Die Schnittstelle 114 umfasst ein zweites Element einer induktiv koppelnden Steckverbinderkupplung, über welche die Sensoreinheit an die Basiseinheit angeschlossen ist.

Die Basiseinheiten 11, 12, 13 umfassen jeweils ein komplementäres Element der Steckverbinderkupplung, sowie einen Mikroprozessor zur Aufbereitung von Daten, die von der Sensoreinheit empfangen werden, um diese dann über einen Feldbus 31 an einen Zentralrechner 30 der Prozessüberwachungsanlage zu übertragen.

Die Basiseinheiten 11 weisen, wie in Fig. 2 für die erste Basiseinheit exemplarisch dargestellt ist, weiterhin jeweils einen Datenspeicher 111 zum Speichern von messstellenspezifischen Daten auf. Diese messstellenspezifischen Daten enthatlen Informationen darüber, welche Softwaremodule für welchen Sensortyp an der jeweiligen Messstelle geeignet sind. Die Softwaremodule können dabei insbesondere Algorithmen zur vorausschauenden Wartung enthalten. Die Basiseinheit umfasst weiterhin eine Kommunikationseinheit 113 mittels derer die Basiseinheit über einen Feldbus mit einer übergeordneten Einheit kommuniziert, beispielsweise dem in Fig. 1 dargestellten Zentralrechner 30.

Erfindungsgemäß wird von der Basiseinheit an die Sensoreinheit mindestens ein Softwaremodul übertragen und in den Programmspeicher der Sensoreinheit gespeichert, wobei das Softwaremodul der Sensoreinheit ergänzende Funktionen zur Überwachung des Primärsensors ermöglicht.

Dieses Softwaremodul ist messstellenspezifisch ausgelegt und ermöglicht beispielsweise eine Prognose von Kalibrierzeiten und anderen Wartungsmaßnahmen unter den Besonderheiten der jeweiligen Messstelle.

Beispielsweise kann ein Softwaremodul für die erste Messstelle 1 die Modellierung der Alterung des Primärsensors bzw. die Bestimmung der Kalibrierzeitpunkte in einem fließenden Medium enthalten, welches sich über eine Schmutzfracht abrasiv auf die pH-Elektrode auswirkt oder zur Verblockung des Diaphragmas der Referenzelektrode der Einstabmesskette beiträgt, in diesem Fall können beispielsweise Zusatzdaten anderer Sensoren über die aktuelle Schmutzfracht und die Durchflussrate zur Messstelle übertragen werden, damit die Sensoreinheit diese Daten bei der aktuellen Belastungsermittlung neben pH-Wert und Temperatur mit berücksichtigen kann. Um die Daten von anderen Sensoren verfügbar zu halten, kann die Messstelle beispielsweise von einer übergeordneten Einheit wie dem Zentralrechner 30 über den Feldbus mit den benötigten Daten in einer angemessenen Aktualisierungsrate versorgt werden, die niedriger sein kann, als die Datenübertragungsrate von den anderen Sensoren zur übergeordneten Einheit. Die Daten können dabei schon von der übergeordneten Einheit statistisch aufbereitet sein, beispielsweise durch zeitliche Mittelung, Integration bzw. Kombination von Daten verschiedener Sensoren. Solche Datenkombinationen können Produkte, Quotienten oder beliebige andere Funktionen oder der Daten umfassen. So kann beispielsweise das Integral des Produkts aus Feststoffanteil eines flüssigen Mediums mit der Durchflussrate periodisch von der übergeordneten Einheit an die Messstelle übertragen werden, um auf dieser Basis die abrasive Belastung bei der Bestimmung der Alterung des Sensors in der Messstelle zu berücksichtigen. Durch die Vorauswertung in der übergeordneten Einheit wird der Datenverkehr auf dem Feldbus entlastet. Um den Datenverkehr noch weiter zu entlasten, können die ausgewerteten Daten anderer Sensoren bzw. deren Kombinationen von der übergeordneten Einheit in alterungsrelevante Indexwerte übersetzt werden, die dann an die Messstelle übertragen werden und von dem messstellenspezifischen Softwaremodul bei der Ermittlung des Alterungsgrades bzw. der Reststandzeit bis zu einer Kalibrierung oder einer Wartungsmaßnahme berücksichtigt werden.

Die zweite Messstelle 2 betrifft beispielsweise einen Hochtemperaturprozess in alkalischen Medien, hier ist die Alterung beispielsweise anhand von Belastungsäquivalenten, die eine Funktion von pH und T sind, hinreichend gut modellierbar. Es ist jedoch dafür sorge zu tragen, dass der für den jeweils eingesetzten Sensortyp, also beispielsweise Glaselektrode oder ISFET-Sensor der passende Algorithmus geladen ist.

An der dritten Messstelle 3 können wieder andere spezifische Bedingungen vorliegen, beispielsweise ein Messmedium, welches die Standzeit des Referenzelektrolyten beeinträchtigt.

In all den genannten Beispielen würden die Sensoren bei gleicher Historie von pH-Wert und Temperatur aufgrund der genannten Besonderheiten der Messstellen unterschiedlich altern. Dementsprechend sind erfindungsgemäß messstellenspezifische Algorithmen zu Sensorüberwachung in form von Softwaremodulen bereitzustellen.

In einer Weiterbildung der Erfindung kommuniziert die Sensoreinheit 21, 22, 23 bei der Inbetriebnahme der Sensoreinheit Informationen zum Sensortyp und zur Art bzw. zur Version der im Programmspeicher bereits gespeicherten Softwaremodule an die Basiseinheit 22, 23, 24. Daraufhin kann die Basiseinheit prüfen, ob die Art und die Version der gegebenenfalls in der Sensoreinheit vorliegenden Softwaremodule für die Messstelle passen. Gegebenenfalls kann die Basiseinheit messstellenspezifische Softwaremodule in einem Speicher bereithalten und im Bedarfsfall an die Sensoreinheit übertragen.

Dies kann insbesondere dann der Fall sein, wenn die Sensoreinheit noch keine zur Messstelle passenden Softwaremodule beinhaltet, bzw. wenn die in dem Speicher der Sensoreinheit vorhandenen Softwaremodule bereits veraltet sind. Ein Softwaremodul ist beispielsweise dann veraltet, wenn eine aktuellere Version des Softwaremoduls vorliegt.

In einer Weiterbildung des erfindungsgemäßen Verfahrens überträgt die Basiseinheit die von der Sensoreinheit empfangene Information über den Sensortyp und zur Art bzw. zur Version der im Programmspeicher der Sensoreinheit gespeicherten Softwaremodule an den Zentralrechner 30 der Prozessüberwachungsanlage, woraufhin die übergeordnete Einheit überprüft, ob geeignetere bzw. aktuellere Softwaremodule für den Sensortyp an der spezifischen Messstelle verfügbar sind, und wobei gegebenenfalls die geeigneteren bzw. aktuelleren Softwaremodule an die Basiseinheit übertragen werden. Die Basiseinheit kann dann diese geeigneteren bzw. aktuelleren Softwaremodule im Datenspeicher abspeichern an die Sensoreinheit weiterleiten. Weiterhin kann über den Zentralrechner 30 beispielsweise über das Internet eine Anfrage an den Hersteller der Sensoren gestellt werden, welches Softwaremodul für einen bestimmten Sensortyp an einer bestimmten Messstelle geeignet ist. Dieses kann dann über das Internet an den Zentralrechner 30 herunter geladen und über das Feldbussystem von dem Zentralrechner zur Basiseinheit der Messstelle übertragen werden.

Im Ergebnis ermöglicht das erfindungsgemäße Verfahren eine einfache Aktualisierung bzw. Anpassung der Sensoreinheiten, insbesondere pH-Sensoren, an die jeweilige Messstelle, was eine vereinfachte Lagerhaltung der pH-Elektroden ermöglicht.

Ergänzend zu den obigen Ausgestaltungen der Erfindung sind Softwaremodule ggf. auch über ein mobiles Servicegerät ladbar, beispielsweise einen portablen Computer. Hierzu kann eine entsprechende Service-Schnittstelle an der Sensoreinheit oder der Basiseinheit vorgesehen sein. Die Service-Schnittstelle kann einen Steckverbinder oder eine Funkverbindung umfassen, beispielsweise eine "bluetooth" Funkverbindung. Dies kann beispielsweise so erfolgen, dass das Servicegerät über die Schnittstelle die Daten der Messstelle abfragt und dann ein im Servicegerät vorgehaltenes Softwaremodul über die Service-Schnittstelle bereitstellt.

Sofern das Servicegerät keine geeignetes Softwaremodul vorhält. Kann dies gegebenenfalls anhand der Messstellendaten von dem Servicegerät über ein W-LAN von einem Server angefordert und herunter geladen werden, bevor es dann der Messstelle über die Serviceschnittstelle bereitgestellt wird. Auf diese Weise wird der Feldbus nicht mit Datenverkehr aufgrund der Übertragung von Softwaremodulen belastet.

## Patentansprüche

1. Verfahren zum Betreiben einer Messstelle (1, 2, 3) zum Bestimmen eines Werts einer physikalischen oder chemischen Messgröße eines Mediums, wobei
die Messstelle (1, 2, 3) eine Basiseinheit (11, 12. 13) und eine Sensoreinheit (21, 22, 23) umfasst, wobei die Sensoreinheit (21, 22, 23) über eine Steckverbinderkupplung lösbar mit der Basiseinheit (11, 12, 13) verbindbar ist;
die Basiseinheit (11, 12, 13) zur Energieversorgung der Sensoreinheit (21, 22, 23), zum Datenaustausch mit der Sensoreinheit (21, 22, 23) und zur Kommunikation eines den Wert der Messgröße repräsentierenden Signals an eine Prozesssüberwachungsanlage vorgesehen ist.
wobei die Basiseinheit (11, 12, 13) umfasst:
ein erstes Element der Steckverbinderkupplung;
einen ersten Mikroprozessor zur Aufbereitung von Daten, die von der Sensoreinheit (21, 22, 23) empfangen werden, zur Kommunikation an die Prozessüberwachungsanlage;
einen ersten Datenspeicher (111) zum Speichern von messstellenspezifischen Daten;
die Sensoreinheit (21, 22, 23) einen Primärsensor und einen Sensorkopf (24) aufweist, wobei der Sensorkopf (24) fest mit dem Primärsensor verbunden ist;
das Medium auf den Primärsensor einwirkt, welcher einen Wandler mit einem Signalausgang umfasst, welcher ein von dem Wert der Messgröße abhängiges elektrisches Signal ausgibt, wobei der Wandler eine veränderliche Übertragungsfunktion aufweist;
wobei der Sensorkopf (24) umfasst:
eine Schaltung zur Aufbereitung der Wandlersignale, wobei die Schaltung einen A/D-Wandler (242) und einen zweiten Mikroprozessor (243) zur Verarbeitung der digitalisierten Signale aufweist,
einen zweiten Datenspeicher (241), in dem sensorspezifische Daten gespeichert sind;
einen Programmspeicher welcher eine hardwarenahe Software mit Grundfunktionalitäten zum Betrieb der Sensoreinheit (21, 22, 23) enthält; und
eine Schnittstelle (245), über welche die Energieversorgung der Sensoreinheit (21, 22, 23) durch die Basiseinheit (11, 12, 13) und der Datenaustausch mit der Basiseinheit (11,12, 13) erfolgt, wobei die Schnittstelle (245) ein zweites Element der Steckverbinderkupplung umfasst;
**dadurch gekennzeichnet, dass** von der Basiseinheit (11, 12, 13) an die Sensoreinheit (21, 22, 23) mindestens ein Softwaremodul übertragen und in dem Programmspeicher der Sensoreinheit (21, 22, 23) abgespeichert wird, wobei das Softwaremodul der Sensoreinheit (21, 22, 23) ergänzende Funktionen zur Überwachung des Primärsensors ermöglicht, wobei das Softwaremodul messstellenspezifisch ausgelegt ist und eine Funktion zur Analyse des Alterungsverhaltens des Primärsensors unter den Bedingungen der Messstelle (1, 2, 3) beinhaltet.
wobei die Sensoreinheit (21, 22, 23) bei der Inbetriebnahme der Sensoreinheit (21, 22, 23) Informationen zum Sensortyp und zur Art der im Programmspeicher gespelcherten Softwaremodule an die Basiseinheit (11, 12, 13) kommuniziert, und wobei die messstellenspezifischen Daten im ersten Datenspeicher (111) Informationen darüber enthalten, welche Softwaremodule für welchen Sensortyp an der jeweiligen Messstelle geeignet sind.

2. Verfahren nach Anspruch 1, wobei das Softwaremodul einen Algorithmus zur vorausschauenden Wartung enthält.

3. Verfahren nach Anspruch 1,
wobei das Softwaremodul eine Prognose von Kalibrierzeiten und anderen Wartungsmaßnahmen unter den Besonderheiten der jeweiligen Messstelle (1, 2, 3) ermöglicht.

4. Verfahren nach Anspruch 1, wobei die Basiseinheit (11, 12, 13) überprüft, ob die Art und die Version der Softwaremodule für die Messstelle (1, 2, 3) passt.

5. Verfahren nach Anspruch 4, wobei die Basiseinheit (11, 12, 13) messstellenspezifische Softwaremodule in einem Speicher bereithält und im Bedarfsfall an die Sensoreinheit (21, 22, 23) überträgt.

6. Verfahren nach einem der Ansprüche 3 bis 4, wobei die Basiseinheit (11, 12, 13) die Informationen zum Sensortyp und zur Art der im Programmspeicher der Sensoreinheit (21, 22, 23) gespeicherten Softwaremodule an eine übergeordnete Einheit (30) der Prozessüberwachungsanlage kommuniziert, und wobei die übergeordnete Einheit (30) überprüft, ob geeignetere bzw. aktuellere Softwaremodule für den Sensortyp an der Messstelle (1, 2, 3) verfügbar sind, und wobei ggf. die geeigneteren bzw. aktuelleren Softwaremodule an die Basiseinheit (11, 12, 13) übertragen werden.

7. Messstelle (1, 2, 3) zum Bestimmen eines Werts einer physikalischen oder chemischen Messgröße eines Medlums, wobei
die Messstelle (1, 2, 3) eine Basiseinheit (11, 12, 13) und eine Sensoreinheit (21, 22, 23) umfasst, wobei die Sensoreinheit (21, 22, 23) über eine Steckverbinderkuppiung lösbar mit der Basiseinheit (11, 12, 13) verbindbar ist;
die Basiseinheit (11, 12, 13) zur Energieversorgung der Sensoreinheit (21, 22, 23), zum Datenaustausch mit der Sensoreinheit (21, 22, 23) und zur Kommunikation eines den Wert der Messgröße repräsentierenden Signals an eine Prozesssüberwachungsanlage vorgesehen ist,
wobei die Basiseinheit (11, 12, 13) umfasst:
ein erstes Element der Steckverbinderkupplung;
einen ersten Mikroprozessor zur Aufbereitung von Daten, die von der Sensoreinheit (21, 22, 23) empfangen werden, zur Kommunikation an die Prozessüberwachungsanlage;
einen ersten Datenspeicher (111) zum Speichern von messstellenspezifischen Daten;
wobei die Sensoreinheit (21, 22, 23) einen Primärsensor und einen Sensorkopf (24) aufweist, wobei der Sensorkopf (24) fest mit dem Primärsensor verbunden ist;
wobei der Primärsensor mit dem Medium beaufschlagbar ist, wobei der Primärsensor einen Wandler mit einem Signalausgang umfasst, welcher ein von dem Wert der Messgröße abhängiges elektrisches Signal ausgibt, wobei der Wandler eine veränderliche Übertragungsfunktion aufweist:
wobei der Sensorkopf (24) umfasst:
eine Schaltung zur Aufbereitung der Wandlersignale, wobei die Schaltung einen A/D-Wandler (242) und einen zweiten Mikroprozessor (243) zur Verarbeitung der digitalisierten Signale aufweist,
einen zweiten Datenspeicher (241), in dem sensorspezifische Daten gespeichert sind;
einen Programmspeicher welcher eine hardwarenahe Software mit Grundfunktionalitäten zum Betrieb der Sensoreinheit (21, 22, 23) enthält; und
eine Schnittstelle (245), über welche die Energieversorgung der Sensoreinheit (21, 22, 23) durch die Basiseinheit (11, 12, 13) und der Datenaustausch mit der Basiseinheit (11, 12, 13) erfolgt, wobei die Schnittstelle (245) ein zweites Element der Steckverbinderkupplung umfasst;
**dadurch gekennzeichnet, dass** von der Basiseinheit (11, 12, 13) an die Sensoreinheit (21, 22, 23) mindestens ein Softwaremodul übertragbar und in dem Programmspeicher der Sensoreinheit (21, 22, 23) speicherbar ist wobei das Softwaremodul ergänzende Funktionen zur Überwachung des Primärsensors enthält, wobei das Softwaremodul messstellenspezifisch ausgelegt ist und eine Funktion zur Analyse des Alterungsverhaltens des Primärsensors unter den Bedingungen der Messstelle (1, 2, 3) beinhaltet.
wobei die Sensoreinheit (21, 22, 23) bei der Inbetriebnahme der Sensoreinheit (21, 22, 23) Informationen zum Sensortyp und zur Art der im Programmspeicher gespeicherten Softwaremodule an die Basiseinheit (11, 12, 13) kommuniziert, und wobei die messstellenspezifischen Daten im ersten Datenspeicher (111) Informationen darüber enthalten, welche Softwaremodule für welchen Sensortyp an der jeweiligen Messstelle geeignet sind.

8. Messstelle (1, 2, 3) nach Anspruch 7, wobei das Softwaremodul einen Algorithmus zur vorausschauenden Wartung enthält.

9. Messstelle (1, 2, 3) nach Anspruch 7.
wobei das Softwarernodul eine Prognose von Kalibrierzeiten und anderen Wartungsmaßnahmen unter den Besonderheiten der jeweiligen Messstelle ermöglicht.

## Claims

1. Process for operating a measuring point (1, 2, 3) designed to determine a value of a physical or chemical measured variable of a medium, wherein
the measuring point (1, 2, 3) comprises a base unit (11, 12, 13) and a sensor unit (21, 22, 23), wherein the sensor unit (21, 22, 23) can be connected to the base unit (11, 12, 13) via a plug-in connector coupling in a temporary manner;
the base unit (11, 12, 13) is provided to supply power to the sensor unit (21, 22, 23), to exchange data with the sensor unit (21, 22, 23) and to communicate a signal, which represents the value of the measured variable, to a process monitoring system,
wherein the base unit (11, 12, 13) comprises:
a first element of the plug-in connector coupling;
a first microprocessor designed to prepare the data, which are received from the sensor unit (21, 22, 23), with a view to communicating them to the process monitoring system;
a first data memory (111) designed to save data specific to the measuring points;
the sensor unit (21, 22, 23) comprises a primary sensor and a sensor head (24), wherein the sensor head (24) is permanently connected to the primary sensor;
the medium acts on the primary sensor that comprises a converter with a signal output, which outputs an electrical signal that depends on the value of the measured variable, wherein the converter has an alterable transmission function;
wherein the sensor head (24) comprises:
a circuit designed to prepare the converter signals, wherein the circuit has an A/D converter (242) and a second microprocessor (243) designed to process the digitized signals,
a second data memory (241) in which sensor-specific data are saved;
a program memory which contains low-level software with basic functions to operate the sensor unit (21, 22, 23); and
an interface (245), via which power is supplied by the base unit (11, 12, 13) to the sensor unit (21, 22, 23) and via which data are exchanged with the base unit (11, 12, 13), wherein the interface (245) comprises a second element of the plug-in connector coupling;
**characterized in that** at least one software module is transmitted from the base unit (11, 12, 13) to the sensor unit (21, 22, 23) and saved in the program memory of the sensor unit (21, 22, 23), wherein the software module of the sensor unit (21, 22, 23) enables additional functions for monitoring the primary sensor, wherein the software module is designed specifically for the measuring point and contains a function for analyzing the aging pattern of the primary sensor under the conditions of the measuring point (1, 2, 3), wherein, when the sensor unit (21, 22, 23) is put into operation, the sensor unit (21, 22, 23) communicates information about the sensor type and type of software modules saved in the program memory to the base unit (11, 12, 13), and wherein the measuring-point-specific data in the first data memory (111) contain information about which specific software modules are suitable for which type of sensor at the individual measuring point.

2. Process as claimed in Claim 1, wherein the software module contains an algorithm for predictive maintenance.

3. Process as claimed in Claim 1, wherein the software module makes it possible to forecast calibration times and other maintenance measures under the special conditions particular to the individual measuring point (1, 2, 3).

4. Process as claimed in Claim 1, wherein the base unit (11, 12, 13) checks whether the type and version of the software modules suit the measuring point (1, 2, 3).

5. Process as claimed in Claim 4, wherein the base unit (11, 12, 13) holds measuring-point-specific software modules in a memory and transmits these modules to the sensor unit (21, 22, 23) where necessary.

6. Process as claimed in one of the Claims 3 to 4, wherein the base unit (11, 12, 13) communicates information about the sensor type and the type of software modules saved in the program memory of the sensor unit (21, 22, 23) to a higher-level unit (30) of the process monitoring system, and wherein the higher-level unit (30) checks whether more suitable or more recent software modules are available for the sensor type at the measuring point (1, 2, 3), and wherein, where necessary, the more suitable and/or more recent software modules are transmitted to the base unit (11, 12, 13).

7. Measuring point (1, 2, 3) designed to determine a value of a physical or chemical measured variable of a medium, wherein
the measuring point (1, 2, 3) comprises a base unit (11, 12, 13) and a sensor unit (21, 22, 23), wherein the sensor unit (21, 22, 23) can be connected to the base unit (11, 12, 13) via a plug-in connector coupling in a temporary manner;
the base unit (11, 12, 13) is provided to supply power to the sensor unit (21, 22, 23), to exchange data with the sensor unit (21, 22, 23) and to communicate a signal, which represents the value of the measured variable, to a process monitoring system,
wherein the base unit (11, 12, 13) comprises:
a first element of the plug-in connector coupling;
a first microprocessor designed to prepare the data, which are received from the sensor unit (21, 22, 23), with a view to communicating them to the process monitoring system;
a first data memory (111) designed to save data specific to the measuring points;
wherein the sensor unit (21, 22, 23) comprises a primary sensor and a sensor head (24), wherein the sensor head (24) is permanently connected to the primary sensor;
wherein the primary sensor can be exposed to the medium, wherein the primary sensor comprises a converter with a signal output, which outputs an electrical signal that depends on the value of the measured variable, wherein the converter has an alterable transmission function;
wherein the sensor head (24) comprises:
a circuit designed to prepare the converter signals, wherein the circuit has an A/D converter (242) and a second microprocessor (243) designed to process the digitized signals,
a second data memory (241) in which sensor-specific data are saved;
a program memory which contains low-level software with basic functions to operate the sensor unit (21, 22, 23); and
an interface (245), via which power is supplied by the base unit (11, 12, 13) to the sensor unit (21, 22, 23) and via which data are exchanged with the base unit (11, 12, 13), wherein the interface (245) comprises a second element of the plug-in connector coupling;
**characterized in that** at least one software module can be transmitted from the base unit (11, 12, 13) to the sensor unit (21, 22, 23) and can be saved in the program memory of the sensor unit (21, 22, 23), wherein the software module contains additional functions for monitoring the primary sensor, wherein the software module is designed specifically for the measuring point and contains a function for analyzing the aging pattern of the primary sensor under the conditions of the measuring point (1, 2, 3),
wherein, when the sensor unit (21, 22, 23) is put into operation, the sensor unit (21, 22, 23) communicates information about the sensor type and type of software modules saved in the program memory to the base unit (11, 12, 13), and wherein the measuring-point-specific data in the first data memory (111) contain information about which specific software modules are suitable for which type of sensor at the individual measuring point.

8. Measuring point (1, 2, 3) as claimed in Claim 7, wherein the software module contains an algorithm for predictive maintenance.

9. Measuring point (1, 2, 3) as claimed in Claim 7, wherein the software module makes it possible to forecast calibration times and other maintenance measures under the special conditions particular to the individual measuring point.

## Revendications

1. Procédé destiné à l'exploitation d'un point de mesure (1, 2, 3) destiné à la détermination d'une valeur d'une grandeur de mesure physique ou chimique d'un produit,
pour lequel
le point de mesure (1, 2, 3) comprend une unité de base (11, 12, 13) et une unité de capteur (21, 22, 23), l'unité de capteur (21, 22, 23) pouvant être reliée de façon amovible avec l'unité de base (11, 12, 13) au moyen d'un connecteur enfichable ;
l'unité de base (11, 12, 13) est prévue pour l'alimentation en énergie de l'unité de capteur (21, 22, 23) en vue de l'échange de données avec l'unité de capteur (21, 22, 23) et en vue de la communication d'un signal représentant la valeur de la grandeur de mesure, à une installation de surveillance du process,
l'unité de base (11, 12, 13) comprenant :
un premier élément du connecteur enfichable ;
un premier microprocesseur destiné au traitement des données, qui sont reçues par l'unité de capteur (21, 22, 23), en vue de la communication à l'installation de surveillance du process ;
une première mémoire de données (111) destinée à la mémorisation de données spécifiques aux points de mesure ; l'unité de capteur (21, 22, 23) comportant un capteur primaire et une tête de capteur (24),
la tête de capteur (24) étant reliée de façon fixe avec le capteur primaire ;
le produit agissant sur le capteur primaire, ce dernier comportant un convertisseur avec une sortie signal, laquelle émet un signal électrique dépendant de la valeur de la grandeur de mesure, le convertisseur présentant une fonction de transmission modifiable ;
la tête de capteur (24) comprenant :
un circuit destiné au traitement des signaux de convertisseur, le circuit comportant un convertisseur A/N (242) et un deuxième microprocesseur (243) destiné au traitement des signaux numérisés,
une deuxième mémoire de données (241), dans laquelle sont mémorisées les données spécifiques au capteur ;
une mémoire de programme, qui contient un logiciel bas niveau avec des fonctionnalités de base, destiné à l'exploitation de l'unité de capteur (21, 22, 23) ; et
une interface (245), par l'intermédiaire de laquelle sont assurés l'alimentation en énergie de l'unité de capteur (21, 22, 23) par l'unité de base (11, 12, 13) ainsi que l'échange de données avec l'unité de base (11, 12, 13), l'interface (245) présentant un deuxième élément du connecteur enfichable ;
**caractérisé en ce qu'**au moins un module logiciel est transmis par l'unité de base (11, 12, 13) à l'unité de capteur (21, 22, 23), module qui est mémorisé dans la mémoire de programme de l'unité de capteur (21, 22, 23), le module logiciel de l'unité de capteur (21, 22, 23) offrant des fonctions complémentaires destinées à la surveillance du capteur primaire, le module logiciel étant conçu de façon spécifique aux points de mesure et contenant une fonction destinée à l'analyse des caractéristiques de vieillissement du capteur primaire dans les conditions du point de mesure (1, 2, 3),
l'unité de capteur (21, 22, 23) communiquant à l'unité de base (11, 12, 13), lors de la mise en service de l'unité de capteur (21, 22, 23), des informations concernant le type de capteur et le type de modules logiciels mémorisés dans la mémoire de programme, et les données spécifiques aux points de mesure, mémorisées dans la première mémoire de données (111), contenant des informations, à savoir quels modules logiciels sont adaptés à quel type de capteur au niveau du point de mesure respectif.

2. Procédé selon la revendication 1, pour lequel le module logiciel contient un algorithme destiné à la maintenance préventive.

3. Procédé selon la revendication 1, pour lequel le module logiciel permet une prévision de temps d'étalonnage et d'autres mesures de maintenance dans les conditions particulières du point de mesure (1, 2, 3) respectif.

4. Procédé selon la revendication 1, pour lequel la station de base (11, 12, 13) vérifie que le type et la version des modules logiciels sont adaptés au point de mesure (1, 2, 3).

5. Procédé selon la revendication 4, pour lequel l'unité de base (11, 12, 13) contient dans une mémoire des modules logiciels spécifiques aux points de mesure et qui, en cas de besoin, sont transmis à l'unité de capteur (21, 22, 23).

6. Procédé selon l'une des revendications 3 et 4, pour lequel l'unité de base (11, 12, 13) communique les informations sur le type de capteur ou sur le type de modules logiciels mémorisés dans la mémoire de programme de l'unité de capteur (21, 22, 23), à une unité maître (30) de l'installation de surveillance du process, et pour lequel l'unité maître (30) vérifie si des modules logiciels plus adaptés ou plus actuels sont disponibles pour le type de capteur sur le point de mesure (1, 2, 3), et pour lequel les éventuels modules logiciels plus adaptés ou plus actuels sont transmis à l'unité de base (11, 12, 13).

7. Point de mesure (1, 2, 3) destiné à la détermination d'une valeur d'une grandeur de mesure physique ou chimique d'un produit, pour lequel
le point de mesure (1, 2, 3) comprend une unité de base (11, 12, 13) et une unité de capteur (21, 22, 23), l'unité de capteur (21, 22, 23) pouvant être reliée de façon amovible avec l'unité de base (11, 12, 13) au moyen d'un connecteur enfichable ;
l'unité de base (11, 12, 13) est prévue pour l'alimentation en énergie de l'unité de capteur (21, 22, 23) en vue de l'échange de données avec l'unité de capteur (21, 22, 23) et en vue de la communication d'un signal représentant la valeur de la grandeur de mesure, à une installation de surveillance du process,
l'unité de base (11, 12, 13) comprenant :
un premier élément du connecteur enfichable ;
un premier microprocesseur destiné au traitement des données, qui sont reçues par l'unité de capteur (21, 22, 23), destiné à la communication à l'installation de surveillance du process ;
une première mémoire de données (111) destinée à la mémorisation de données spécifiques aux points de mesure ;
l'unité de capteur (21, 22, 23) comportant un capteur primaire et une tête de capteur (24), la tête de capteur (24) étant reliée de façon fixe avec le capteur primaire ;
le capteur primaire pouvant être alimenté avec le produit, le capteur primaire comportant un convertisseur avec une sortie signal, laquelle émet un signal électrique dépendant de la valeur de la grandeur de mesure, le convertisseur présentant une fonction de transmission modifiable ;
la tête de capteur (24) comprenant :
un circuit destiné au traitement des signaux de convertisseur, le circuit comportant un convertisseur A/N (242) et un deuxième microprocesseur (243) destiné au traitement des signaux numérisés,
une deuxième mémoire de données (241), dans laquelle sont mémorisées les données spécifiques au capteur ;
une mémoire de programme, qui contient un logiciel bas niveau avec des fonctionnalités de base, destiné à l'exploitation de l'unité de capteur (21, 22, 23) ; et
une interface (245), par l'intermédiaire de laquelle sont assurés l'alimentation en énergie de l'unité de capteur (21, 22, 23) par l'unité de base (11, 12, 13) ainsi que l'échange de données avec l'unité de base (11, 12, 13), l'interface (245) présentant un deuxième élément du connecteur enfichable ;
**caractérisé en ce qu'**au moins un module logiciel peut être transmis par l'unité de base (11, 12, 13) à l'unité de capteur (21, 22, 23), et peut être mémorisé dans la mémoire de programme de l'unité de capteur (21, 22, 23), le module logiciel de l'unité de capteur (21, 22, 23) contenant des fonctions complémentaires destinées à la surveillance du capteur primaire, le module logiciel étant conçu de façon spécifique aux points de mesure et contenant une fonction destinée à l'analyse des caractéristiques de vieillissement du capteur primaire dans les conditions du point de mesure (1, 2, 3),
l'unité de capteur (21, 22, 23) communiquant à l'unité de base (11, 12, 13), lors de la mise en service de l'unité de capteur (21, 22, 23), des informations concernant le type de capteur et le type de modules logiciels mémorisés dans la mémoire de programme, et les données spécifiques aux points de mesure, mémorisées dans la première mémoire de données (111), contenant des informations, à savoir quels modules logiciels sont adaptés à quel type de capteur au niveau du point de mesure respectif.

8. Point de mesure (1, 2, 3) selon la revendication 7, pour lequel le module logiciel contient un algorithme destiné à la maintenance préventive.

9. Point de mesure (1, 2, 3) selon la revendication 7, pour lequel le module logiciel permet une prévision de temps d'étalonnage et d'autres mesures de maintenance dans les conditions particulières du point de mesure respectif.
